# Europäisches Patentamt

# European Patent Office

# Office européen des brevets

(19)

(11) Veröffentlichungsnummer: **0 099 323**
**B1**

(12) **EUROPÄISCHE PATENTSCHRIFT**

(45) Veröffentlichungstag der Patentschrift:
**14.10.87**

(51) Int. Cl.⁴: **G 21 C 3/32**

(21) Anmeldenummer: **83710047.8**

(22) Anmeldetag: **02.07.83**

(54) Kernbrennstoffkassette.

(30) Priorität: **12.07.82 SE 8204270**

(43) Veröffentlichungstag der Anmeldung:
**25.01.84 Patentblatt 84/4**

(45) Bekanntmachung des Hinweises auf die Patenterteilung:
**14.10.87 Patentblatt 87/42**

(84) Benannte Vertragsstaaten:
**BE CH DE FR GB IT LI NL**

(56) Entgegenhaltungen:
**EP-A-0 036 142**
**EP-A-0 050 836**
**EP-A-0 054 827**
**US-A-3 481 021**

(73) Patentinhaber: **AB ASEA- ATOM, S-721 83 Västeras (SE)**

(72) Erfinder: **Borrman, Bo, Rörverksgatan 16, S-72474 Västeras (SE)**
Erfinder: **Nylund, Olov, Dipl.- Ing., Box 17051, S-72017 Västeras (SE)**

(74) Vertreter: **Boecker, Joachim, Dr.- Ing., Rathenauplatz 2-8, D-6000 Frankfurt a.M. 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft eine Kernbrennstoffkassette gemäß dem Oberbegriff des Anspruches 1. Eine solche Brennstoffkassette ist bekannt aus der EP-A-0 036 142.

Bei der aus der EP-A-0 036 142 bekannten Brennstoffkassette hat jede der vier Kassettenhüllenwände einen in Längsrichtung der gesamten Kassettenhülle verlaufenden versteifenden Rücken. Jeder Flügel ist mit dem ihm zugeordneten Rücken mittels mehrerer horizontal gerichteter, durch die Wände der Kassettenhülle hindurchgehender Niete mechanisch verbunden. Jeder Niet läuft dabei durch einen ihm zugeordneten, zwischen Flügel und Rücken angeordneten Distanzklotz. Durch die Anordnung solcher Distanzklötze erhält man einen gewissen Abstand zwischen dem Flügel und der Kassettenhüllenwand, und die dadurch entstehenden Spalte dienen als hydraulische Querverbindungen zwischen den benachbarten Teilkanälen.

Die EP-A-0 036 142 zeigt in den Figuren 16, 19, 203 und 21 auch eine Brennstoffkassette der eingangs genannten Art, die sich von der eben beschriebenen dadurch unterscheidet, daß die Anzahl der Bauteile kleiner ist und die Nietverbindungen durch stärkere geschweißte Verbindungen ersetzt sind. Jeder Versteifungsflügel besteht dabei aus zueinander parallelen Blechelementen. In die Seitenwände sind im Bereich der zu befestigenden Versteifungsflügel nach innen zeigende offene schlitzartige Stutzen eingestanzt, an deren ins innere der Kassette weisenden schmalen Kanten die schmalen Kanten der Blechelemente der Versteifungsflügel angeschweißt sind. Die Herstellung der Schweißnaht ist schwierig, insbesondere wenn sie von außen vorgenommen werden soll und die genannten schlitzförmigen Stutzen sehr tief in die Kassette hineinragen. Zusätzlich sind an den Versteifungsflügeln in der Nähe der zugeordneten Kassettenhüllenwand liegende Löcher oder Einschnitte vorhanden, um ausreichend große hydraulische Verbindungen zwischen den Teilkanälen der Kassette zu schaffen.

Der Erfindung liegt die Aufgabe zugrunde eine Kernbrennstoffkassette der eingangs genannten Art zu entwickeln, bei der die Herstellung der Schweinverbindungen in relativ einfacher Weise von außen durchgeführt werden kann, der Aufbau der Versteifungsflügel einfach ist und hydraulische Verbindungen zwischen den Strömungswegen innerhalb der Versteifungsflügel und dem Raum außerhalb der Kassette vermieden werden können.

Zur Lösung dieser Aufgabe wird eine Kernbrennstoffkassette gemäß dem Oberbegriff des Anspruches 1 vorgeschlagen, die erfindungsgemäß die im kennzeichnenden Teil des Anspruches genannten Merkmale hat.

Vorteilhafte Ausgestaltungen der Erfindung sind in den weiteren Ansprüchen genannt.

Gemäß einer Weiterentwicklung der Erfindung sind mehrere der nach innen eingebeulten oder eingeprägten Abschnitte des genannten Mittelabschnittes mit vertikal verlaufenden Schlitzen oder Nuten versehen, die entsprechende Abschnitte der Versteifungsflügel aufnehmen, wodurch die korrekte Positionierung der Versteifungsanordnung erleichtert wird.

Bei der Erfindung kann unabhängig davon, ob in der Hüllenwand Schlitze oder Nuten vorgesehen sind, die Verschweißung stets auf einfache Weise von außen erfolgen. Die Versteifungsflügel können in einfacherer Weise ohne Löcher oder Einschnitte an ihren Außenkannte hergestellt werden. Durch entsprechende Tiefe der Stutzen lassen sich auch ohne diese Einschnitte oder Löcher ausreichend große hydraulische Verbindungen herstellen, ohne daß hierdurch das Verschweißen erschwert wird. Eine hydraulische Verbindung zwischen dem Innenraum der Versteifungsflügel und dem Raum außerhalb der Kassette wird bei der Kernbrennstoffkassette nach der Erfindung vermieden.

Anhand der in den Figuren gezeigten Ausführungsbeispiele soll die Erfindung näher erläutert werden. Es zeigen

Figur 1 ein erstes Ausführungsbeispiel einer Kernbrennstoffkassette gemäß der Erfindung im Vertikalschnitt längs der Linie I-I in Figur 2,

Fig. 2 bis 4 Horizontalschnitte länges der Linien II-II, III-III bzw. IV-IV in Fig. 1,

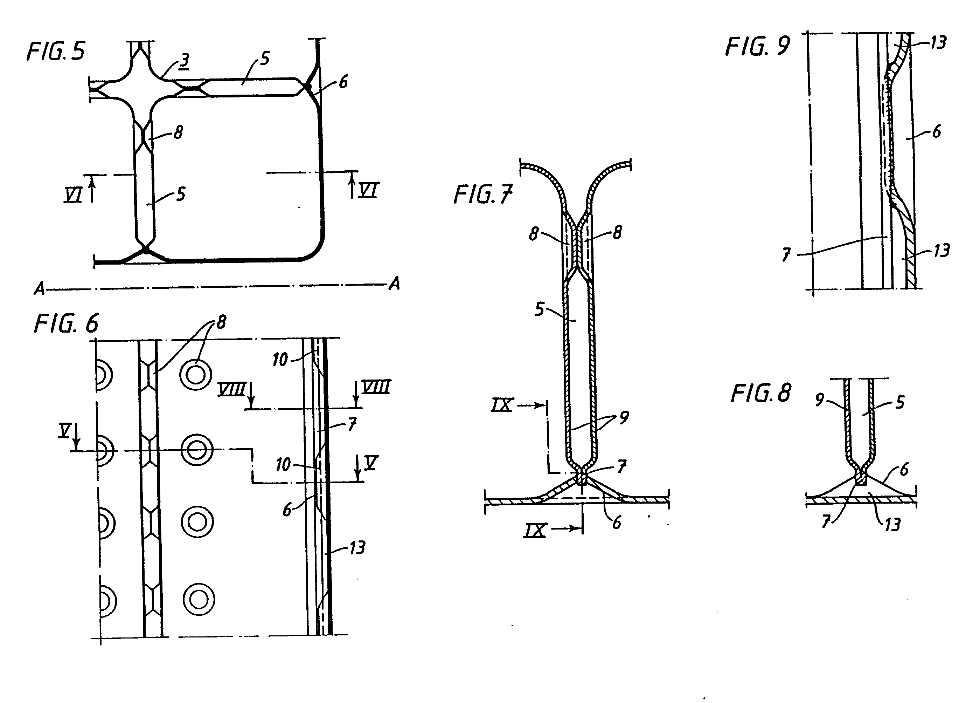

Fig. 5 ein Detail der Ausführungsform nach den Figuren 1 bis 4 längs der Linie V-V in Fig. 6,

Fig. 6 einen Vertikalschnitt längs der Linie VI-VI in Fig. 5,

Fig. 6 A eine Seitenansicht senkrecht zu einer die Linie A-A in Fig. 5 enthaltenden Vertikalebene,

Fig. 7 eine Einzelheit aus Fig. 5 in vergrößertem Maßstab,

Fig. 8 einen partiellen Horizontalschnitt längs der Linie VIII-VIII in Fig. 6,

Fig. 9 einen partiellen Vertikalschnitt längs der Linie IX-IX in Fig. 7,

Fig. 10 für eine zweite Ausführungsform gemäß der Erfindung einen partiellen Horizontalschnitt durch einen in der Kassettenhüllenwand eingeprägten Vorsprung,

Fig. 11 einen partiellen Vertikalschnitt längs der Linie XI-XI in Fig. 10,

Fig. 12 eine Einzelheit bei einer dritten Ausführungsform gemäß der Erfindung, wobei diese Einzelheit in derselben Darstellung abgebildet ist wie in Fig. 7 und dazu bestimmt ist, die dort gezeigte Einzelheit zu ersetzen. Im übrigen weicht diese Ausführungsform der Brennstoffkassette nicht von der gemäß den Figuren 1 bis 4 ab,

Fig. 13 eine entsprechende Einzelheit wie in Fig. 12 und in derselben Darstellung wie in Fig. 12 für eine vierte Ausführungsform gemäß der Erfindung.

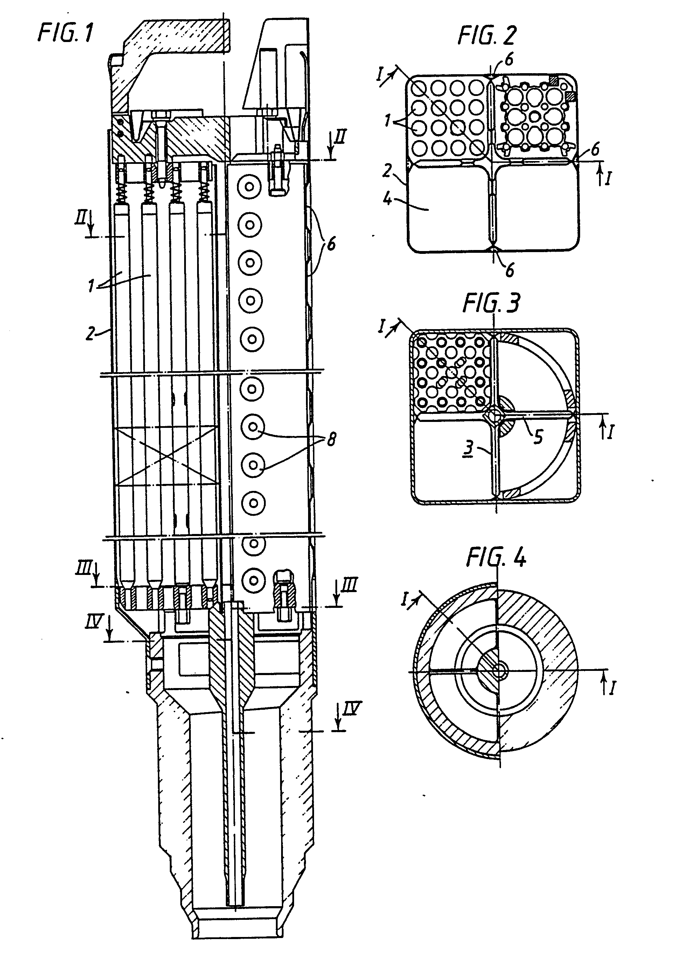

Die in Fig. 1 gezeigte Brennstoffkassette enthält 64 vertikal angeordnete Brennstäbe 1, die von der im wesentlichen mit quadratischem Querschnitt ausgebildeten Hülle (dem Kasten) 2 der Brennstoffkassette umschlossen sind. Der von der Hülle 2 gebildete Brennstoffkanal ist mittels einer Versteifungsanordnung 3 mit im wesentlichen kreuzförmigem Querschnitt in vier Teilkanäle 4 aufgeteilt, von denen jeder ein Teilbündel von Brennstäben aufnimmt. Jedes Teilbündel enthält 16 Brennstäbe. Die Versteifungsanordnung 3 ist aus vier untereinander gleichen langgestreckten Blechelementen 9 mit L-förmigem Querschnitt aufgebaut und erstreckt sich zumindest über einen größeren Teil der Länge der Brennstäbe. Jedes Blechelement ist mit mehreren eingeprägten Vorsprüngen 8 versehen, die an entsprechenden Vorsprüngen der benachbarten Blechelemente anliegen und durch Punktschweißung an diesen festgeschweißt sind. Außerdem ist jedes Blechelement 9 an dem jeweils benachbarten Blechelement 9 längs seiner vertikalen Kante festgeschweißt. Die Versteifungsanordnung 3 bildet somit vier hohle Versteifungsflügel 5, die sich in vertikaler Richtung zumindest über einen größeren Teil der Länge des Brennstoffkanals erstrecken. Jeder Flügel hat eine gerade vertikale Außenkante, die an mehreren Stellen an der Wand der Hülle 2 festgeschweißt ist. Die Versteifungsanordnung 3 bildet ein mit kreuzförmigem Hohlquerschnitt ausgebildetes Wasserrohr, das von Wasser durchströmt wird, welches wegen seines geringen Hohlraumanteils eine hohe Moderatorwirkung hat. Jeder Versteifungsflügel hat dabei mindestens einen vertikalen Kanal, der sich wenigstens über einen größeren Teil der Länge der Brennstäbe erstreckt.

Jede Seite der Kassettenhülle ist mit mehreren vertikal hintereinander angeordneten, in das Blechmaterial eingeprägten Vorsprüngen 6 versehen, von denen jeder eine Fläche hat, die nach innen konvex und nach außen konkav geformt ist. An allen vier Seitenwänden der Hülle 2 sind diese Vorsprünge mit je einem vertikalen, die Blechwand durchdringenden Schlitz 10 versehen, wobei die Schlitze 10 auf ein und derselben vertikalen Linie liegen. Jeder Flügel 5 ist nahe der Hüllenwand mit einem vertikal verlaufenden Randabschnitt 7 versehen, dessen Breite erheblich kleiner ist als die durchschnittliche horizontale Abmessung des Flügels 5.

Jeder Randabschnitt ist ohne nennenswertes Spiel in mehrere vertikale Schlitze 10 eingefügt, von denen jeder in seinem zugehörigen eingeprägten Vorsprung 6 in derselben Hüllenwand vorhanden ist. Der Randabschnitt 7 ist an der Hüllenwand mittels einer an der Außenseite der Hüllenwand angesetzten Lichtbogenschweißung, vorzugsweise ohne Zusatzmaterial, festgeschweißt, d.h. daß das Blechmaterial der Hüllenwand mit dem des Versteifungsflügels 5 zusammengeschmolzen wird.

In jedem Zwischenraum zwischen zwei benachbarten eingeprägten Vorsprüngen 6 ist zwischen dem Randabschnitt 7 und der Hüllenwand eine Durchtrittsöffnung 13 vorhanden, über die benachbarte Teilkanäle 4 hydraulisch miteinander querverbunden sind. Die Durchtrittsöffnung 13 wird begrenzt von dem Randabschnitt 7, einem ebenen Teil der Brennstoffkassettenhüllenwand und zwei konvex geformten Flächen, von denen jede zu einem Vorsprung 6 gehört.

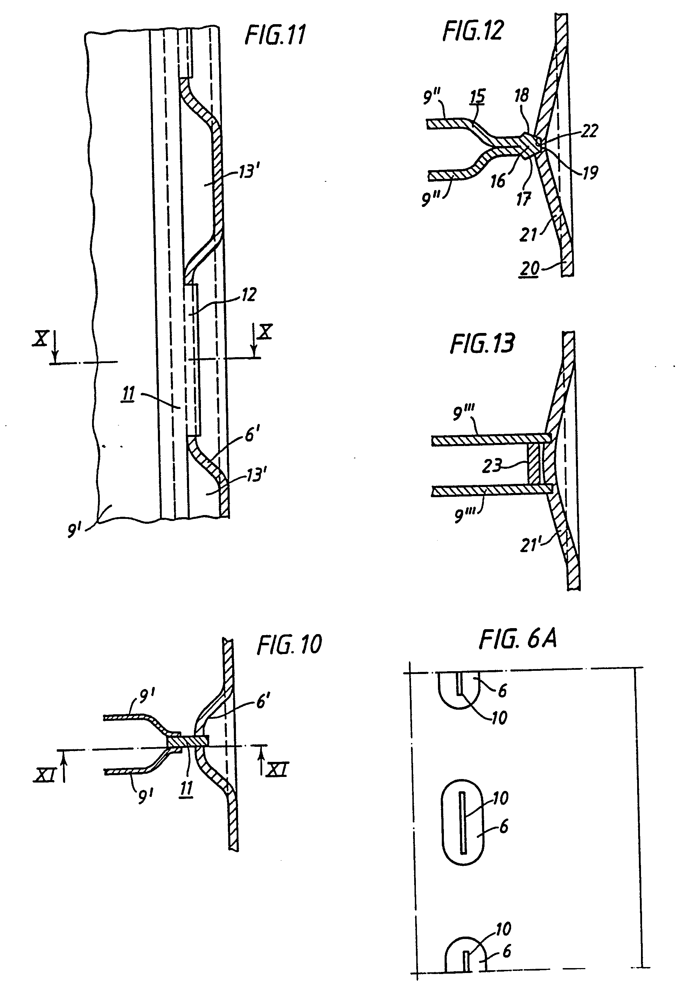

Die in den Figuren 10 und 11 dargestellte Ausführungsform unterscheidet sich von der oben beschriebenen im wesentlichen nur dadurch, daß die mit kreuzförmigem Querschnitt ausgebildete Versteifungsanordnung in ihrem an die Hüllenwand grenzenden Bereich anders aufgebaut ist. Die kreuzförmige Versteifungsanordnung ist aus vier Blechelementen 9' mit L-förmigem Querschnitt aufgebaut, die im Bereich ihrer vertikal verlaufenden Kanten an einen zwischengefügten vertikalen Blechstreifen 11 festgeschweißt sind, der ungefähr die gleiche Länge wie die Hülle der Brennstoffkassette hat. Der Blechstreifen 11 hat mehrere horizontale Vorsprünge 12, die in je einen Schlitz in einem eingeprägten Vorsprung 6' der Hüllenwand hineinragen. Dadurch, daß die horizontalen (radialen) Vorsprünge 12 annähernd die gleiche vertikale Länge wie die Schlitze 10 haben, erhält man eine mechanische Verbindung, die die Montage erleichtert und die nach Verschweißung längs der vertikalen Schlitze sehr zuverlässig und fest ist.

Bei der in den Figuren 10 und 11 gezeigten Ausführungsform ist es beim Montieren der Versteifungsanordnung notwendig, die Wände der Brennstoffhülle elastisch auszubiegen.

In Figur 12 bezeichnet 15 einen Versteifungsflügel, der genauso wie der Versteifungsflügel 5 aus Blechabschnitten zusammengesetzt ist, die zu Blechelementen mit L-förmigem Querschnitt gehören. Diese sind in Figur 12 mit 9'' bezeichnet. Der Versteifungpflügel 15 hat einen äußeren, vertikal verlaufenden Randabschnitt 16, in dem die beiden Blechelemente 9'' miteinander zusammengeschweißt sind. Der Randabschnitt 16 erstreckt sich vertikal längs wenigstens eines größeren Teils der Länge des Brennstoffkanals und wird über seine gesamte Länge von drei in ihrer jeweiligen Vertikalebene liegenden Flächen 17, 18, 19 begrenzt, wobei die Flächen 17 und 18 zueinander in Richtung zur vertikalen Mittelachse der Brennstoffkassette divergieren. Die in der Nähe des Versteifungsflügels 15 befindliche Hüllenwand 20 ist mit mehreren in die Wand eingeprägten Vorsprüngen 21 versehen, die im wesentlichen in der gleichen Weise wie die oben beschriebenen Vorsprünge 6 ausgebildet und angeordnet sind, jedoch mit dem Unterschied, daß die Vorsprünge 21 anstelle eines vertikalen Schlitzes eine vertikale Nut 22 haben, wobei der äußere Randabschnitt 16 in mehrere solche Nuten eingeführt ist. Der Randabschnitt 16 ist in jede Nut 22 der Hüllenwand 20 in der Weise festgeschweißt, daß ein Wandabschnitt, der auf die Fläche 19 gerichtet ist, mittels eines Lichtbogens durchschmolzen ist. Das Metall des Versteifungsflügels 15 ist also mit dem Metall in der Hüllenwand zusammengeschmolzen. In beiden Fällen ist das Metall eine für Kernreaktorzwecke geeignete Zirkoniumlegierung.

Die Nut 22 kann zweckmäßig zur gleichen Zeit geprägt oder gestanzt werden, zu der der Vorsprung 21 in die Hüllenwand mittels Prägung geformt wird. Die Nut 22 kann auch eine Tiefe haben, die im Verhältnis zur Dicke der Hüllenwand sehr klein ist, oder die Nut kann ganz entfallen, in welchem Fall das Blechmaterial des Vorsprungs 21 in seiner ganzen Dicke mittels eines von der konkaven Seite des Vorsprungs angesetzten Lichtbogens durchschmolzen wird.

Figur 13 zeigt eine Alternative zu dem in Figur 12 gezeigten Detail, wobei 9''' zwei Blechelemente bezeichnet, die nur betreffend ihrer Formgebung der der Hüllenwand am nächsten liegenden Abschnitte von den Blechelementen 9'' abweichen. Der Vorsprung 21' hat zwei parallele vertikale Nuten, wobei jedes Blechelement 9''' in je einer dieser Nuten mittels eines von der Außenseite der Hülle angesetzten Lichtbogens festgeschweißt ist. Ein vertikaler Blechstreifen 23, der längs der ganzen Länge des Versteifungsflügels verläuft, ist an den Blechelementen 9''' festgeschweißt.

## Patentansprüche

1. Kernbrennstoffkassette für einen Siedewasserreaktor mit einer Vielzahl von Brennstäben (1), die von einer Kassettenhülle (2) mit im wesentlichen rechteckförmigem Querschnitt umschlossen sind, mit einer von der Kassettenhülle umschlossenen langgestreckten Versteifungsanordnung (3), die sich zumindest längs eines größeren Teils der Länge der Brennstäbe erstreckt und deren vertikale Mittellinie in der Nähe der vertikalen Mittellinie der Kassettenhülle liegt, mit vier die Versteifungsanordnung bildenden Versteifungsflügeln, die in Vertikalebenen mit einem gegenseitigen Winkelabstand von ca. 90° angeordnet sind, wobei die Versteifungsflügel (5) mechanisch miteinander und mit je einer Seitenwand der Kassettenhülle derart verbunden sind, daß die Seitenwände der Kassettenhülle beim Betrieb des Reaktors sich nicht herausbiegen können, die Versteifungsflügel (5) als Trennwände zwischen vier Teilbündeln von Brennstäben dienen und jeder Versteifungsflügel (5) mindestens einen vertikalen inneren Wasserkanal hat, der sich wenigstens längs eines überwiegenden Teils der Länge der Brennstäbe erstreckt, mit mehreren innerhalb der Kassettenhülle gelegenen durchgehenden Öffnungen (13, 13') durch wenigstens einen der Versteifungsflügel, welche Öffnungen in vertikaler Richtung auf einer Linie liegen und eine hydraulische Verbindung zwischen benachbarten Teilbündeln herstellen, wobei die Öffnungen (13, 13') von dem Versteifungsflügel und der diesem benachbarten Seitenwand der Kassettenhülle (2) dadurch gebildet werden, daß von mehreren Seitenwandabschnitten je ein aus der Seitenwand nach innen herausgedrückte Vorsprung ausgeht, der mit dem zugehörigen Versteifungsflügel durch eine Schweißverbindung verbunden ist, dadurch gekennzeichnet, daß jeder der genannten Vorsprünge (6, 6'; 21, 21') in die Seitenwand der Kassettenhülle eingeprägt ist und eine nach innen gerichtete konvexe Fläche und eine nach außen gerichtete konkave Fläche hat, daß jede der Verbindungsöffnungen (13, 13') teilweise von zwei der genannten konvexen Flächen begrenzt ist und daß jeder Vorsprung an dem geschlossenen Ende des Versteifungsflügels (5) durch einen von der konkaven Seite des Vorsprunges (6, 6'; 21, 21') her vorgenommenen Schweißvorgang derart befestigt ist, daß die Seitenwände der Kassettenhüle im wesentlichen geschlossen sind.

2. Kernbrennstoffkassette nach Anspruch 1, dadurch gekennzeichnet, daß jeder Vorsprung mit mindestens einer vertikalen Nut (22) versehen ist und daß mehrere Nuten, die zu verschiedenen Vorsprüngen an derselben Kassettenhüllewand gehören, vertikal auf einer Linie liegen und so bemessen sind, daß sie ohne nennenswertes Spiel in der Querrichtung den ihnen jeweils zugeordneten Abschnitt desselben Versteifungsflügels aufzunehmen vermogen.

3. Kernbrennstoffkassette nach Anspruch 1, dadurch gekennzeichnet, daß jeder Vorsprung mit mindestens einem vertikalen Schlitz (10) versehen ist und daß mehrere Schlitze, die zu verschiedenen Vorsprüngen an derselben Kassettenhüllenwand gehören, vertikal auf einer Linie liegen und so bemessen sind, daß sie ohne nennenswertes Spiel in der Querrichtung den ihnen jeweils zugeordneten Abschnitt desselben Versteifungsflügels aufzunehmen vermögen.

4. Kernbrennstoffkassette nach einem der vorhergehenden Ansprüche, dadurch gekennzeichnet, daß jeder Vorsprung durch Lichtbogenschweißung an dem Versteifungsflügel in mindestens einer entsprechenden Schweißzone befestigt ist, in der unter Durchschmelzen der Wand der Kassettenhülle zu dem Vorsprung gehörendes Blechmaterial mit zu dem Versteifungsflügel gehörendem Blechmaterial vereinigt worden ist.

## Claims

1. Fuel assembly for a boiling water reactor with a plurality of fuel rods (1) surrounded by a fuel channel (2) of substantially rectangular cross-section, with an elongated stiffening device (3) surrounded by said fuel channel said stiffening device extending at least along a major part of the length of the fuel rods and the vertical centre line of which is positioned in the vicinity of the vertical centre line of said fuel channel, with four stiffening wings forming said stiffening device and being arranged in vertical planes angularly displaced from one another by about 90 degrees, said stiffening wings (5) being mechanically connected to one another and to one side wall each of the fuel channel to prevent the side walls of the fuel channel from bending outwardly during operation of the reactor, said stiffening wings (5) forming partition walls between four sub-bundles of fuel rods and being provided each with at least one vertical inner water passageway extending along at least a predominant part of the length of the fuel rods, and with a plurality of openings (13, 13') positioned inside the fuel channel and passing through at least one of the stiffening wings, said openings being aligned in the vertical direction and providing a hydraulic communication between adjacent sub-bundles, these openings (13, 13') being formed by the stiffening wing and the corresponding adjacent side wall of the fuel channel (2) in such a way, that from a plurality of side wall sections one projection each, bulged out of the plane of the side wall, projects inwardly from said side wall and is connected to the corresponding stiffening wing by a weld joint, characterized in that each of said projections (6, 6'; 21, 21') is stamped in said side wall of the fuel channel with an inwardly facing convex surface and an outwardly facing concave surface, that each of said communication openings (13, 13') is partly confined by two of said convex surfaces, and that each projection has been connected to the closed end of the stiffening wing (5) by means of a welding operation performed from the concave side of the projection (6, 6; 21, 21') such that the side walls of the fuel channel are essentially closed.

2. Fuel assembly according to Claim 1, characterized in that each projection is provided with at least one vertical slot (22) and that several slots belonging to separate projections of the same fuel channel wall are vertically aligned and dimensioned such, that they are adapted to accommodate a corresponding section of the same stiffening wing without mentionable play in transverse direction.

3. Fuel assembly according to Claim 1, characterized in that each projection is provided with at least one vertical slit (10) and that a plurality of slits belonging to different projections of the same fuel channel wall are vertically aligned and dimensioned such, that they are adapted to accommodate a corresponding section of the same stiffening wing without mentionable play in transverse direction.

4. Fuel assembly according to any of the preceding Claims, characterized in that each projection is connected to said stiffening wing in at least one corresponding welding zone by means of arc welding by which sheet material belonging to said projection and sheet material belonging to said stiffening wing are united by through-melting of the wall of the fuel channel.

### Revendications

1. Assemblage de combustible nucléaire pour un réacteur à eau bouillante, comprenant une grappe de crayons combustibles (1) entourés d'un boîtier-canal (2) de section transversale sensiblement rectangulaire, un dispositif de renforcement (3) oblong, entouré du boîtier-canal, s'étendant sur au moins une grande partie de la longueur des crayons combustibles et dont la ligne médiane verticale est à proximité de la ligne médiane verticale du boîtier-canal, quatre ailettes de renforcement qui forment le dispositif de renforcement et qui sont disposées dans des plans verticaux à environ 90° l'un de l'autre, les ailettes de renforcement (5) étant reliées mécaniquement les unes aux autres et chacune à une paroi latérale du boîtier-canal de manière que les parois latérales du boîtier-canal ne puissent pas se courber vers l'extérieur lors du fonctionnement du réacteur, les ailettes de renforcement (5) servant de cloisons de séparation entre quatre grappes partielles de crayons combustibles et chaque ailette de renfocement (5) ayant au moins un canal intérieur à eau, qui s'étend sur au moins une partie prépondérante de la longueur des crayons combustibles, plusieurs ouvertures traversantes (13, 13') pratiquées à l'intérieur du boîtier-canal dans l'une au moins des ailettes de renforcement, ces ouvertures étant alignées suivant la direction verticale et assurant une liaison hydraulique entre des grappes partielles voisines, les ouvertures (13, 13') étant formées à partir de l'ailette de renforcement et de la paroi latérale du boîtier-canal 2 qui en est voisine de manière que des parties de la paroi latérale, en saillie vers l'intérieur et reliées à leur ailette de renforcement par un joint soudé, soient issues respectivement de plusieurs sections de la paroi latérale, caractérisé en ce que chacune des parties saillantes (6, 6'; 21, 21') mentionnées est réalisée par empreinte dans la paroi latérale du boîtier-canal et a une surface convexe tournée vers l'intérieur et une surface concave tournée vers l'extérieur, en ce que chacune des ouvertures de liaison (13, 13') est délimitée en partie par deux des surfaces convexes mentionnées et en ce que chaque partie saillante est fixée à l'extrémité fermée de l'ailette de renforcement (5) par un processus de soudage effectué à partir du côté concave de la partie saillante (6, 6'; 21, 21') de manière que les parois latérales du boîtier-canal soient sensiblement fermées.

2. Assemblage de combustible nucléaire suivant la revendication 1, caractérisé en ce que chaque partie saillante est munie d'au moins une gorge (22) verticale et en ce que plusieurs gorges, qui appartiennent à des parties saillantes différentes de la même paroi de boîtier-canal, sont alignées verticalement et ont des dimensions telles qu'elles peuvent recevoir, sans jeu notable dans la direction transversale, la section qui leur est associée de la même ailette de renforcement.

3. Assemblage de combustible nucléaire suivant la revendication 1, caractérisé en ce que chaque partie saillante est munie d'au moins une fente (10) verticale et en ce que plusieurs fentes qui appartiennent à des parties saillantes différentes de la même paroi de boîtier-canal, sont alignées verticalement et ont des dimensions telles qu'elles peuvent recevoir, sans jeu notable dans la direction transversale, la section qui leur est associée de la même ailette de renforcement.

4. Assemblage de combustible nucléaire suivant l'une des revendications précédentes, caractérisé en ce que chaque partie saillante est fixée par soudage à l'arc électrique à l'ailette de renforcement en au moins une zone de soudure correspondante, dans laquelle la paroi du boîtier-canal tournée vers le matériau en tôle appartenant à la partie saillante a été réunie avec fusion au matériau en tôle appartenant à l'ailette de renforcement.

**FIG.1**

**FIG. 2**

**FIG. 3**

**FIG. 4**

FIG. 9

FIG. 8

FIG. 7

FIG. 5

FIG. 6

FIG.11

FIG.12

FIG.13

FIG.10

FIG. 6A